# EUROPEAN PATENT APPLICATION

(11) **EP 4 815 149 A1**
(43) Date of publication of application: **30.09.2026**
(21) Application number: 25820387.6
(22) Date of filing: 28.05.2025
(51) Int. Cl.: H01M 50/258, H01M 10/04

(54) **BATTERY PACK**

(30) Priority: 07.06.2024 KR 20240074562
(71) Applicant: LG Energy Solution, Ltd., Seoul 07335 (KR)
(72) Inventor: SON, Hong Se, Daejeon 34122 (KR); KIM, Dongwoo, Daejeon 34122 (KR); AN, Seong Woo, Daejeon 34122 (KR)
(74) Representative: Plasseraud IP
(86) International application number: PCT/KR2025/007268
(87) International publication number: WO 2025/254383

(57) **Abstract**

A battery pack according to an embodiment of the present disclosure comprise: a battery module including a battery cell stack in which a plurality of battery cells are stacked; a pack housing in which the battery module is mounted; and a coupling member comprising: a pack fixing part that can be fixed between the pack housing and the coupling member, and a battery module fixing part that can be fixed between the battery module and the coupling member, so as to perform coupling between the battery module and the pack housing, wherein among the plurality of coupling members that can be coupled to the pack housing, the specifications of the battery module fixing part of each of the plurality of coupling members are provided so as to correspond to the specifications of the battery module that can be mounted in the pack housing, so that a coupling member suitable for the specifications of the battery module to be mounted in the pack housing is selected to couple to the battery module.

## Description

### TECHNICAL FIELD

### Cross Citation with Related Application(s)

This application claims priority to and the benefit of Korean Patent Application No. 10-2024-0074562, filed on June 7, 2024, the disclosure of which is incorporated herein by reference in its entirety.

The present disclosure relates to a battery pack, and more particularly, to a battery pack that allows battery modules with various specifications to be changed/replaced and coupled within one pack housing.

### BACKGROUND

In modern society, as portable devices such as a mobile phone, a notebook computer, a camcorder and a digital camera, as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and an exterior material, i.e., a battery case which seals and accommodates the electrode assembly together with an electrolyte.

In general, the lithium secondary battery may be classified into a can-type secondary battery in which the electrode assembly is embedded in a metal can, and a pouch-type secondary battery in which the electrode assembly is embedded in a pouch of an aluminum laminate sheet, according to the shape of the exterior material.

In the case of the secondary batteries used in small-sized devices, two or three battery cells are disposed, but in the case of the secondary batteries used in medium and large-sized devices, such as automobiles, a battery module in which the plurality of battery cells are electrically connected is used. The plurality of battery cells are connected to each other in series or in parallel to form a cell assembly, so that the battery module has improved capacity and output. One or more battery modules may be mounted together with various control and protection systems, such as a battery management system (BMS), a battery disconnect unit (BDU) and a cooling system to form a battery pack.

A battery pack may include a battery module as a subordinate concept thereof, and the battery module may include a battery cell as a subordinate concept thereof. In addition, the number of battery cells included in the battery module or the number of battery modules included in the battery pack may be variously determined according to the output or capacity of the battery pack required for an electric vehicle or an energy storage system (ESS).

On the other hand, according to the prior art, the portion where the battery module is coupled within a pack housing of the battery pack is fixedly provided, which causes an inconvenience in that when the specifications of the battery module are changed/replaced, the corresponding pack housing must also be replaced together.

Therefore, there is a need to develop a method that can couple battery modules of various specifications even by means of one pack housing.

### DETAILED DESCRIPTION OF THE INVENTION

### Technical Problem

It is an object of the present disclosure to provide a battery pack that allows battery modules with various specifications to be changed/replaced and coupled within one pack housing.

However, the technical objects to be solved by embodiments of the present disclosure are not limited to the above-described objects, and can be variously expanded within the scope of the technical idea included in the present disclosure.

### Technical Solution

According to an aspect of the present disclosure, provided is a battery pack comprising: a battery module including a battery cell stack in which a plurality of battery cells are stacked; a pack housing in which the battery module is mounted; and a coupling member comprising: a pack fixing part that can be fixed between the pack housing and the coupling member, and a battery module fixing part that can be fixed between the battery module and the coupling member, so as to perform coupling between the battery module and the pack housing, wherein the specifications of the battery module fixing part of each of the plurality of coupling members are provided so as to correspond to the specifications of the battery module that can be mounted in the pack housing among the plurality of coupling members that can be coupled to the pack housing, so that a coupling member suitable for the specifications of the battery module to be mounted in the pack housing is selected to couple to the battery module.

In an embodiment, the battery module may comprise a coupling member mounting part that is coupled to the coupling member, and the specifications of the battery module fixing parts of each of the plurality of coupling members may be provided so as to correspond to the specifications of the coupling member mounting part of the battery module that can be mounted on the pack housing.

In an embodiment, the battery module may comprise a module housing in which the battery cell stack is accommodated, and the coupling member mounting part may be provided in the module housing.

In an embodiment, the battery module may comprise an end plate that supports at least one surface of the battery cell stack, and the coupling member mounting part may be provided on the end plate.

In an embodiment, the battery module fixing part of the coupling member and the coupling member mounting part of the battery module may each comprise at least one fastening hole, and a fastener is inserted through the fastening hole of the battery module fixing part of the coupling member and the fastening hole of the coupling member mounting part of the battery module to thereby fix between the battery module and the coupling member, and the specification may comprise at least one of the size, position, number, shape, structure, and arrangement of the fastening hole.

In an embodiment, among the plurality of coupling members, the fastening hole of the battery module fixing part of the selected coupling member and the fastening hole of the coupling member mounting part of the battery module may be aligned in a line, through which the fastener may be passed to couple between the coupling member and the battery module.

In an embodiment, among the plurality of coupling members, the size, position, number, shape, structure, and arrangement of the fastening hole of the battery module fixing part of the selected coupling member may coincide with the size, position, number, shape, structure, and arrangement of the fastening hole of the coupling member mounting part of the battery module.

In an embodiment, among the plurality of coupling members, at least some of the coupling members may each differ in at least one of the size, location, number, shape, structure, and arrangement of the fastening holes.

In an embodiment, the battery module may be provided with a plurality of coupling member mounting parts, and comprise the coupling member mounting part on each of both opposed surfaces of the battery module, or comprise the coupling member mounting part on each corner of the battery module, and the coupling member mounting part of the battery module and the battery module fixing part of the coupling member are each provided by a plurality of sets.

In an embodiment, the pack housing may comprise a coupling member mounting part to which the coupling member is mounted, and the specifications of the pack fixing parts of each of the plurality of coupling members may be provided so as to correspond to the specifications of the coupling member mounting part of the pack housing.

In an embodiment, the specifications of the pack fixing part of each of the plurality of the coupling members and the specifications of the coupling member mounting part of the pack housing may be all the same, regardless of the specifications of the battery module.

In an embodiment, the pack fixing part of the coupling member and the coupling member mounting part of the pack housing may each comprise at least one fastening hole, and a fastener may be inserted through the fastening hole of the pack fixing part of the coupling member and the fastening hole of the coupling member mounting part of the pack housing, thereby being fixed between the coupling member and the pack housing, and the specification may comprise at least one of the size, position, number, shape, structure, and arrangement of the fastening hole.

In an embodiment, the fastening hole of the pack fixing parts of each of the plurality of the coupling members and the fastening hole of the coupling member mounting part of the pack housing may be aligned in a line, through which the fastener may be passed through to thereby couple between the coupling members to the battery modules.

In an embodiment, the size, position, number, shape, structure, and arrangement of the fastening hole of the pack fixing parts of each of the plurality of the coupling members may coincide with the size, position, number, shape, structure, and arrangement of the fastening hole of the coupling member mounting part of the pack housing.

In an embodiment, in the coupling member, the battery module fixing part may be located on a surface different from the surface on which the pack fixing part is located.

In an embodiment, the battery pack may further comprise a coupling member formed in left-right symmetry or up-down symmetry with the coupling member.

In an embodiment, the coupling member and the pack housing may be formed integrally.

### Advantageous Effects

According to embodiments of the present disclosure, even by means of one pack housing, the battery modules with various specifications can be changed/replaced and coupled within the pack housing, thereby improving manufacturing efficiency and reducing costs.

The effects of the present disclosure are not limited to the effects mentioned above, and additional other effects not described above will be clearly understood from the description of the appended claims by those skilled in the art.

### BRIEF DESCRIPTION OF THE DRAWINGS

FIG. 1 shows a simplified conceptual diagram of a battery pack according to an embodiment of the present disclosure.
FIG. 2 shows an enlarged view of a battery module and a coupling member coupled to the battery module according to an embodiment of FIG. 1.
FIG. 3 is an exploded perspective view of FIG. 2.
FIG. 4 is a reference diagram of FIG. 2, showing an enlarged view of a battery module and a coupling member coupled to the battery module according to another embodiment of FIG. 1.
FIG. 5 shows an enlarged view of a section A of FIG. 2.
FIG. 6(a) shows a cross-sectional view taken along line B-B of the coupling member mounting part provided in the battery module of FIG. 5, and FIG. 6(b) shows a top view of the coupling member of FIG. 5.
FIG. 7 is a reference diagram of FIG. 6, showing a state in which FIGS. 6(a) and (b) each are rotated by 90 degrees.
FIG. 8 shows a modified embodiment of FIG. 6.
FIG. 9(a) shows the coupling member mounting part provided in the pack housing of FIG. 1, and FIG. 9(b) shows the pack fixing part provided in the coupling member described above in FIGS. 1 to 8.
FIGS. 10 and 11 are each a diagram showing a state of use of the battery pack 1000 and coupling member 200 described above with reference to FIGS. 1 to 9.

### DETAILED DESCRIPTION OF THE EMBODIMENTS

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are exaggerated.

Further, when a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Now, embodiments of the present disclosure will be described with reference to the accompanying drawings.

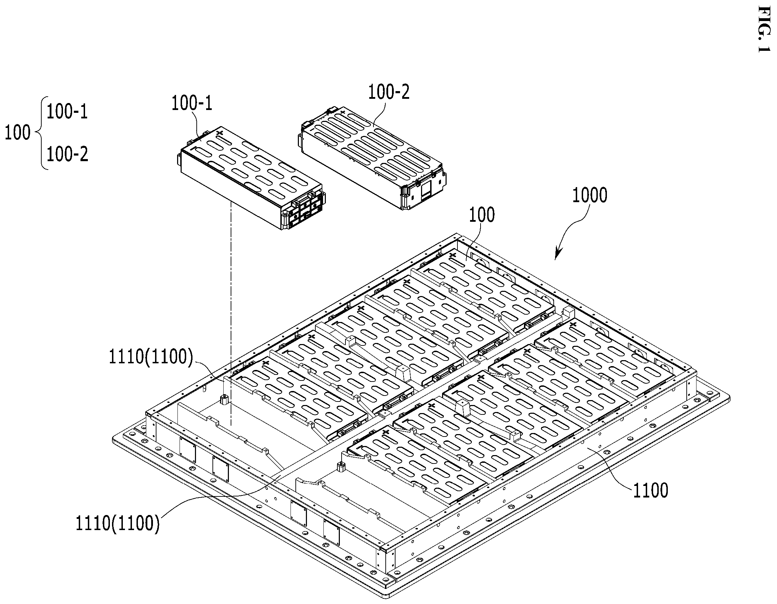

First, FIG. 1 shows a simplified conceptual diagram of a battery pack according to an embodiment of the present disclosure.

The battery pack 1000 includes at least one battery module 100 in a pack housing 1100. FIG. 1 illustratively shows a case where a plurality of battery modules 100 are provided within a battery pack 1000. When a plurality of battery modules 100 are accommodated in a pack housing 1100, the internal space of the pack housing 1100 may be partitioned, for example, by a crossbeam 1200, and then the battery modules 100 may be mounted in each partitioned internal space of the pack housing 1100.

Fastening may be achieved by a method for fixing the battery module 100 mounted on the pack housing 1100, for example, by a method of including a fastening hole in the pack housing 1100 and the battery module 100, and inserting fasteners (e.g., bolts) into the fastening hole of the pack housing 1100 and the fastening hole of the battery module 100.

On the other hand, according to the prior art, if the specifications of the battery module 100 mounted in the pack housing 1100 are changed, the size and position of the fastening hole of the battery module 100 may be changed, which causes an inconvenience of having to newly provide the pack housing 1100. This also became a factor in the increase in production cost.

However, according to the present disclosure, even if the specifications of the battery module 100 are changed/replaced, for example, even if it is changed or replaced with the battery module 100-2 instead of the battery module 100-1, the existing pack housing 1100 can be used as it is.

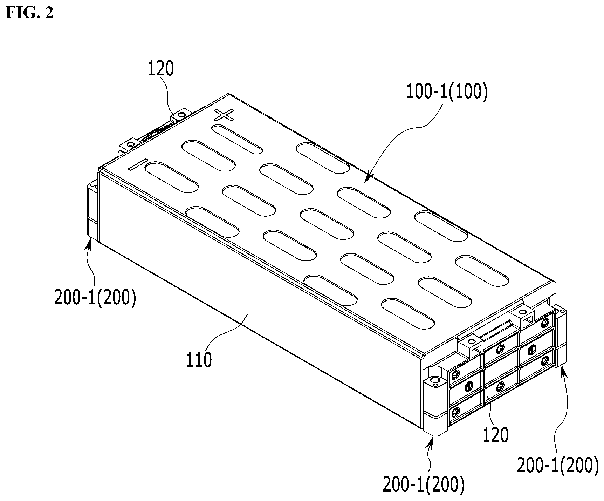

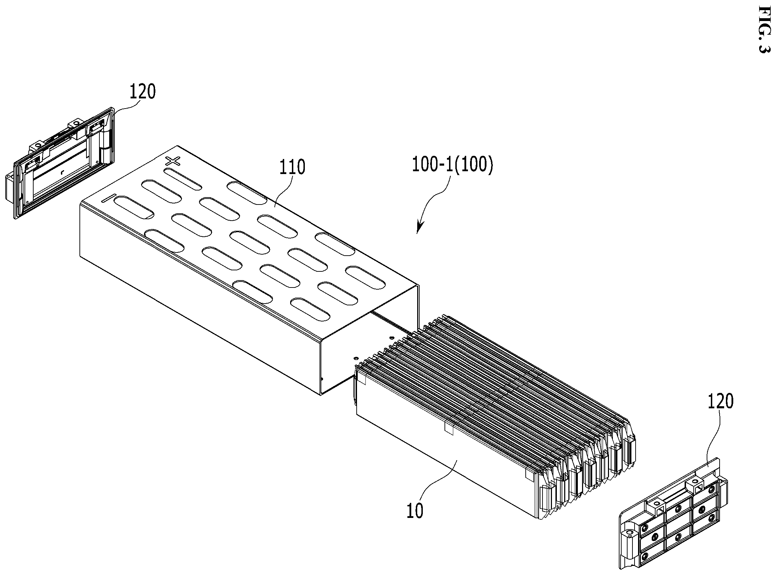

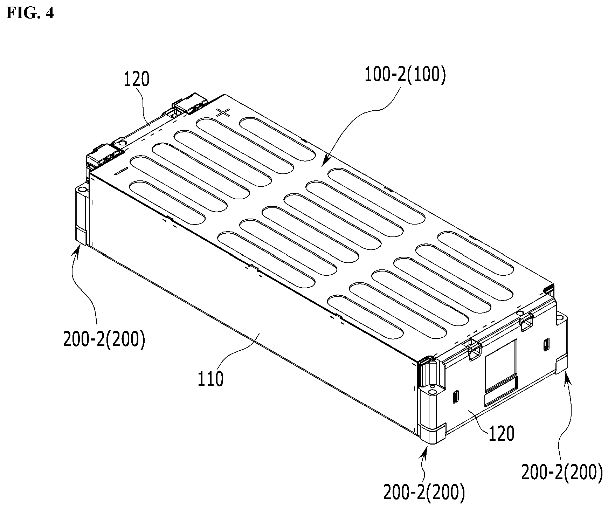

FIG. 2 shows an enlarged view of a battery module and a coupling member coupled to the battery module according to an embodiment of FIG. 1. FIG. 3 is an exploded perspective view of the battery module of FIG. 2. FIG. 4 is a reference diagram of FIG. 2, showing an enlarged view of a battery module and a coupling member coupled to the battery module according to another embodiment of FIG. 1.

In FIGS. 2 and 3, a battery module 100-1 is illustrated as an embodiment of a battery module. In FIG. 4, a battery module 100-2 is illustrated as another embodiment of a battery module.

First, according to the present disclosure, although the battery module 100-1 of FIG. 2 and the battery module 100-2 of FIG. 4 are different battery modules, they can be mounted in the same type of pack housing 1100 of FIG. 1 by appropriately selecting the coupling member 200 described below.

Referring to FIGS. 2 and 3, the battery module 100 includes a battery cell stack 10 in which a plurality of battery cells are stacked, and the battery cell stack 10 may be accommodated in a module housing 110. A busbar housing assembly (not shown) may be coupled to the portion of the battery cell stack 10 where the electrode leads are located, and the battery module 100 may be assembled by covering the top of the busbar housing assembly with an end plate 120.

Alternatively, in some cases, the battery module 100 may be a battery module with a so-called module-less structure. For further detail, the battery module may be configured such that an end plate is placed on one surface or both opposed surfaces of a battery cell stack 10 and the battery cell stack 10 and the end plates are bound together with a strap or the like to form a cell module assembly (CMA).

The battery module 100 according to the present disclosure is not limited to those illustrated in FIGS. 2 to 4, and a conventional battery module may be employed. In this case, the battery module 100 according to the present disclosure is sufficient as long as it has a structure that allows the coupling member 200 according to the present disclosure to be coupled.

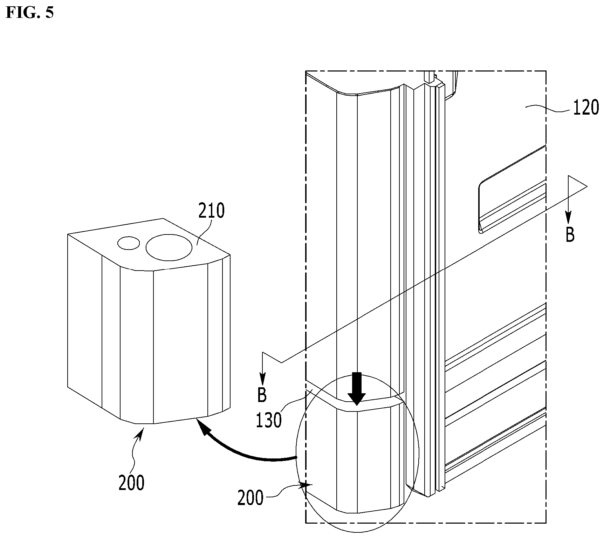

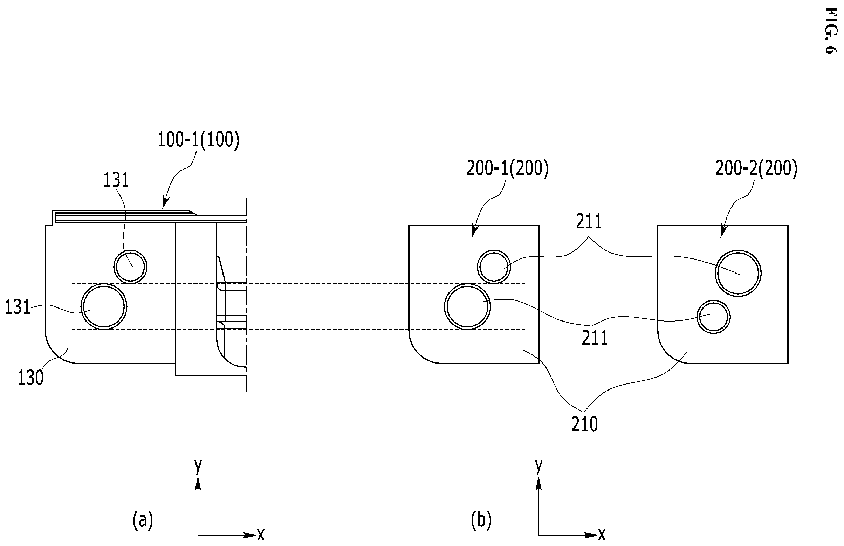

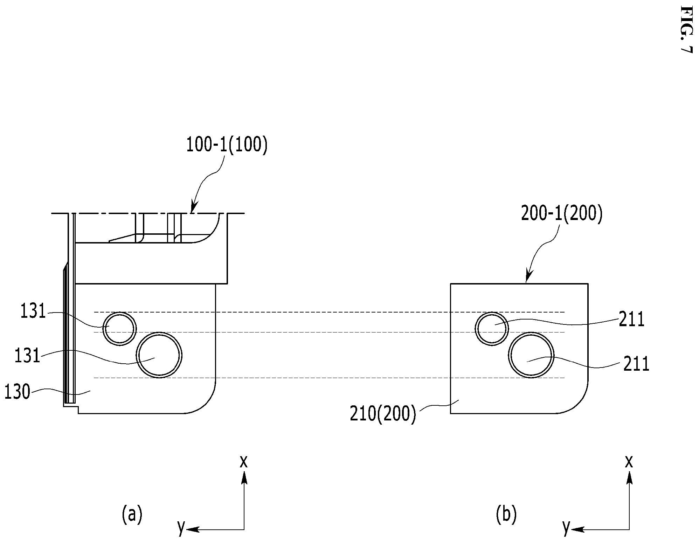

FIG. 5 shows an enlarged view of a section A of FIG. 2. FIG. 6(a) shows a cross-sectional view taken along line B-B of the coupling member mounting part provided in the battery module of FIG. 5. FIG. 6(b) shows a top view of the coupling member of FIG. 5. FIG. 7 is a reference diagram of FIG. 6, showing a state in which FIGS. 6(a) and (b) each are rotated by 90 degrees.

The embodiments of FIGS. 2 to 6 exemplarily show a case where the coupling member 200 is coupled to the battery module 100, more specifically, a case where the coupling member 200 is coupled to the end plate 120 of the battery module. However, the present disclosure is not limited thereto, and it is sufficient if the coupling member 200 may be coupled to the battery module 100 to mount the battery module 100 on the pack housing 1100. The embodiment can be modified and changed in various ways, such as allowing the coupling member 200 to be coupled to the module housing 110.

Referring to FIG. 6(a) and FIG. 7(a), the coupling member mounting part 130 of the battery module 100 includes at least one fastening hole 131 through which a fastener (not shown) may pass to couple with the coupling member 200. Similarly, referring to FIGS. 6(b) and 7(b), the coupling member 200 includes at least one fastening hole 131 through which the fastener may pass to couple with the battery module 100. The fastening hole 131 of the coupling member mounting part 130 of the battery module 100 may be formed, for example, so as to pass through in up-down direction of the battery module 100.

Meanwhile, at least one of the size, position, number, shape, structure, and arrangement of the fastening hole 131 may vary depending on the specifications(specs)/model/type of the battery module 100. Therefore, in the prior art, when the battery module 100 is directly coupled to the battery pack 1000, the pack housing 1100 of the battery pack 1000 must also be modified/replaced accordingly.

However, according to the present disclosure, the battery pack includes a coupling member 200, wherein the coupling member 200 includes a battery module fixing part 210. The battery module fixing part 210 of the coupling member 200 is coupled to the coupling member mounting part 130 of the battery module 100. For this purpose, the coupling member 200 includes at least one fastening hole 211 in the battery module fixing part 210, and the fastening hole 211 of the coupling member 200 corresponds (matches) to at least one fastening hole 131 of the coupling member mounting part 130 of the battery module 100. For further detail, the fastening hole 211 of the coupling member 200 and the fastening hole 131 of the coupling member mounting part 130 of the battery module 100 may be aligned in a line. Thereby, the fastener pass through both the fastening hole 211 of the coupling member 200 and the fastening hole 131 of the coupling member mounting part 130 of the battery module 100 to thereby fix between the coupling member 200 and the battery module 100.

For this purpose, according to the present disclosure, a variety of coupling members 200 that conform to the various specifications/models/types of the battery module 100 are provided, and a coupling member 200 that conforms to the selected specification/model/type of the battery module 100 is selected. The coupling member 200 selected in conformance to the specification/model/type of the battery module 100 is coupled to the coupling member mounting part 130 of the battery module 100. For this purpose, a plurality of coupling members 200 are provided, wherein each of the plurality of coupling members 200 includes a battery module fixing part 210 having various specifications (specs)/models/types in conformance to various specifications (specs)/models/types of the battery modules 100.

Among the first coupling member 200-1 and the second coupling member 200-2 illustrated in the embodiment of FIG. 6, a first coupling member 200-1 that conforms to the first battery module 100-1 is selected. In this case, the specification(spec)/model/type of the battery module fixing part 210 of the first coupling member 200-1 differ from the specification(spec)/model/type of the battery module fixing part 210 of the second coupling member 200-2.

More specifically, the illustrative embodiment of FIGS. 6 and 7 shows a case in which the fastening hole 131 of the coupling member mounting part 130 of the battery module 100 and the fastening hole 211 of the coupling member 200 are each provided in two numbers, and the cross section (horizontal cross section) is formed in a circular shape.

Further, the position, size, and arrangement of the fastening hole 211 of the coupling member 200 are the same as the position, size, and arrangement of the fastening hole 131 of the coupling member mounting part 130 of the battery module 100. Referring to the dotted line shown in FIG. 6, it can be seen that the position, size, and arrangement of the fastening hole 211 of the coupling member 200 are the same as the position, size, and arrangement of the fastening hole 131 of the coupling member mounting part 130 of the battery module 100 in the horizontal direction (the X-axis direction in the figure). Similarly, referring to the dotted line shown in FIG. 7, it can be seen that the position, size, and arrangement of the fastening hole 211 of the coupling member 200 are the same as the position, size, and arrangement of the fastening hole 131 of the coupling member mounting part 130 of the battery module 100 in the vertical direction (the Y-axis direction in the figure).

Meanwhile, the fastener may be, for example, screw-coupled to the fastening hole 211 of the coupling member 200 and the fastening hole 131 of the battery module 100. For example, the fastener may have a male screw shape, and the fastening hole 211 of the coupling member 200 and the fastening hole 131 of the battery module 100 may have a female screw shape.

However, the present disclosure is not limited thereto, and can be modified and changed in various ways. For example, the fastener may simply pass through the fastening hole 211 of the coupling member 200 and the fastening hole 131 of the battery module 100 to be coupled by welding or the like. Alternatively, a hook coupling may be achieved by including a hooking ring in the fastener and also including the fastening hole 211 of the coupling member 200 and the fastening hole 131 of the battery module 100.

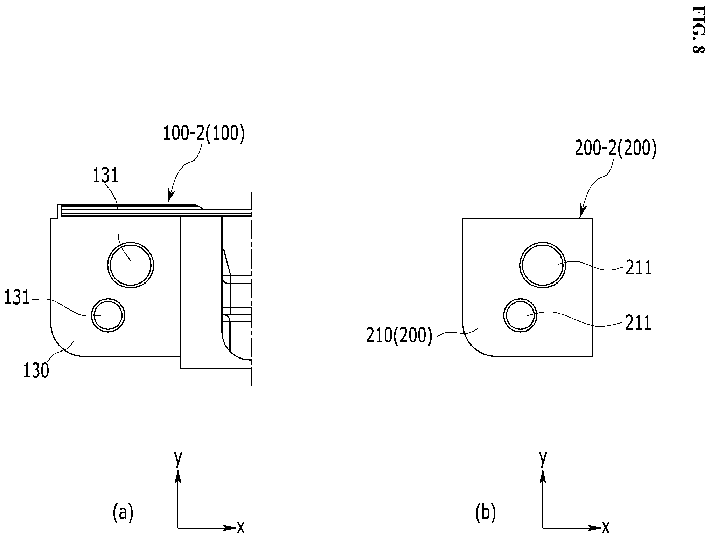

FIG. 8 shows a modified embodiment of FIG. 6. In FIG. 8, an illustrative embodiment is shown in which the second coupling member 200-2 conforming to the second battery module 100-2 is selected among the first coupling member 200-1 and the second coupling member 200-2 in FIG. 6.

The illustrative embodiment of FIG. 8 shows a case where the first battery module 100-1 of FIG. 6 is changed to the second battery module 100-2 of FIG. 8. In this case, the position, size, and arrangement of the fastening hole 211 of the second battery module 100-2 of FIG. 8 differ from the position, size, and arrangement of the fastening hole 211 of the first battery module 100-1 of FIG. 6. Thereby, a case where the second coupling member 200-2 conforming to the second battery module 100-2 is selected among the first coupling member 200-1 and second coupling member 200-2 of FIG. 6 is illustrated in FIG. 8.

In addition, the descriptions regarding the fastening method between the battery module 100 and the coupling member 200 in the embodiment of FIG. 8 overlap with those described with reference to FIGS. 6 and 7, and therefore, refer to the foregoing description.

Further, in FIGS. 6 to 8, an illustrative embodiment is shown in which a plurality of coupling members 200 are provided, including a first coupling member 200-1 and a second coupling member 200-2, the first coupling member 200-1 is selected for the first battery module 100-1, and the second coupling member 200-2 is selected for the second battery module 100-2, but the present disclosure is not limited thereto. In addition to the coupling members 200 illustrated in FIGS. 6 to 8, various other shapes, structures, and types of coupling members 200 can be provided, and a battery module 100 conforming thereto can be selected and applied to the present disclosure. It also goes without saying that three or more of the plurality of coupling members 200 prepared in advance may also be provided and applied to the present disclosure.

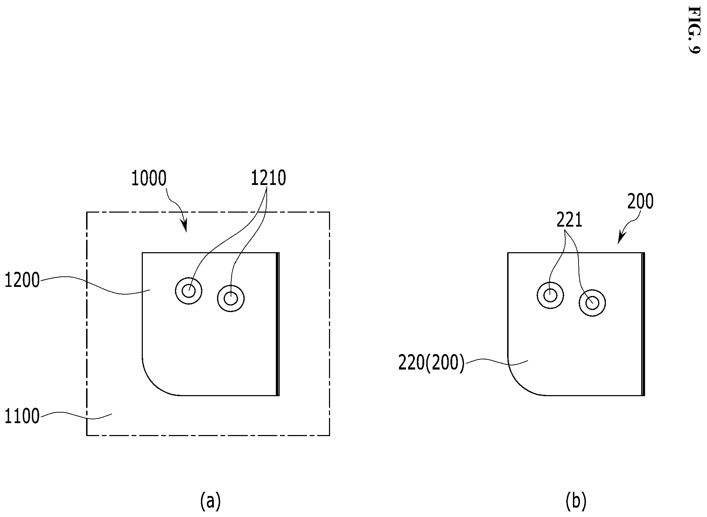

FIG. 9(a) shows the coupling member mounting part provided in the pack housing of FIG. 1, and FIG. 9(b) shows the pack fixing part provided in the coupling member described above in FIGS. 1 to 8.

Referring to FIG. 9(a), a pack housing 1100 is provided with a coupling member mounting part 1200 to which a coupling member 200 may be mounted. Referring to FIG. 9(b), the coupling member 200 includes a pack fixing part 220. The coupling between the pack housing of FIG. 1 and the coupling member described above with reference to FIGS. 1 to 8 is illustrated.

First, the coupling member 200 is coupled to the pack housing 1100. It may be coupled onto the bottom surface or the side surface of the pack housing 1100, or it may be coupled to a cross beam 1110 that is provided as a component of the pack housing 1100 and partitions the internal space of the pack housing 1100.

The pack fixing part 220 of the coupling member 200 is coupled to the coupling member mounting part 1200 of the pack housing 1100. For this purpose, the coupling member 200 includes at least one fastening hole 221 in the pack fixing part 220, and the fastening hole 221 of the coupling member 200 corresponds (matches) to at least one fastening hole 221 of the pack fixing part 220 of the pack housing 1100. For further detail, the fastening hole 221 of the coupling member 200 and the fastening hole 1211 of the coupling member mounting part 1200 of the pack housing 1100 may be aligned in a line. Thereby, the fastener may pass through both the fastening hole 221 of the coupling member 200 and the fastening hole 1211 of the coupling member mounting part 1200 of the pack housing 1100 to thereby be fixed between the coupling member 200 and the pack housing 1100.

The battery module fixing part 210 and the pack fixing part 220 of the coupling member 200 may be formed on mutually different surfaces. The battery module 100 is coupled to the battery module fixing part 210 of the coupling member 200, and the pack housing 1100 is coupled to the pack fixing part 220 of the coupling member 200, so that coupling is performed between the battery module 100 and the pack housing 1100. For example, in the embodiments of FIGS. 1 to 9, the battery module fixing part 210 may be provided on the upper surface of the coupling member 200, and the pack fixing part 220 may be provided on the lower surface of the coupling member 200. In this case, the pack fixing part 220 of the coupling member 200 is brought into contact with the coupling member mounting part 1200 provided on the bottom surface of the pack housing 1100, so that coupling is performed between the pack housing 1100 and the coupling member 200. Then, the coupling member mounting part 130 of the battery module 100 is brought into contact with the battery module fixing part 210 of the coupling member 200, thereby coupling the battery module 100 to the coupling member 200.

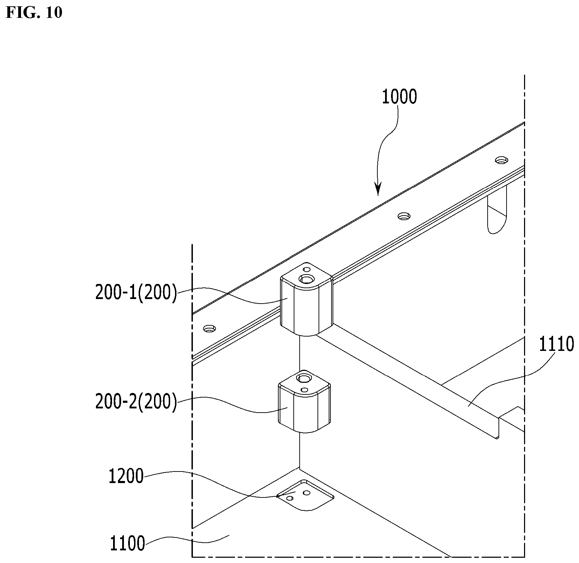

Meanwhile, the coupling member mounting part 1200 may include a step recessed from the bottom surface of the pack housing 1100 as shown in FIG. 10, but the present disclosure is not limited thereto, and it is sufficient if it is the position where the coupling member 200 can be mounted and coupled. If the coupling member mounting part 1200 includes a step recessed from the bottom surface of the pack housing 1100, it is possible to more easily grasp the position where the coupling member 200 should be placed on the pack housing 1100.

Although the embodiment of FIG. 9 exemplarily illustrates a case where two fastening hole 221 of the coupling member 200 and two fastening hole 1211 of the pack housing 1100 are provided, each of which is asymmetrically disposed and has the same cross-sectional size, but the present disclosure is not limited thereto, and various modifications and variations can be made for the fastening hole 221 of the coupling member 200 and the fastening hole 1211 of the pack housing 1100.

Meanwhile, according to an embodiment of the present disclosure, as exemplarily shown in FIGS. 6 to 8, a plurality of coupling members 200 are provided, including a first coupling member 200-1 and a second coupling member 200-2, the first coupling member 200-1 is selected for the first battery module 100-1, and the second coupling member 200-2 is selected for the second battery module 100-2. In this case, as described above, the specification(spec)/model/type of the battery module fixing part 210 of the first coupling member 200-1 differs from the specification(spec)/model/type of the battery module fixing part 210 of the second coupling member 200-2.

However, the pack fixing parts 220 of each of the first coupling member 200-1 and the second coupling member 200-2 may all have the same specification(spec)/model/type. For example, the size, position, number, shape, structure, and arrangement of the fastening hole 221 of the pack fixing parts 220 of each of the first coupling member 200-1 and the second coupling member 200-2 may all be the same, regardless of the specifications/model/type of the battery module 100.

Thereby, regardless of the various specifications(specs)/models/types of the battery modules 100 constituting the battery pack 1000, even if one pack housing 1100 is provided, battery modules 100 of various specifications(specs)/models/types may be selected to configure the pack housing 1100. That is, even if the specification(spec)/model/type of the battery module 100 are changed, there is an advantage that the existing pack housing 1100 can be used as it is. This results in the effect of reducing costs when manufacturing the battery pack 1000.

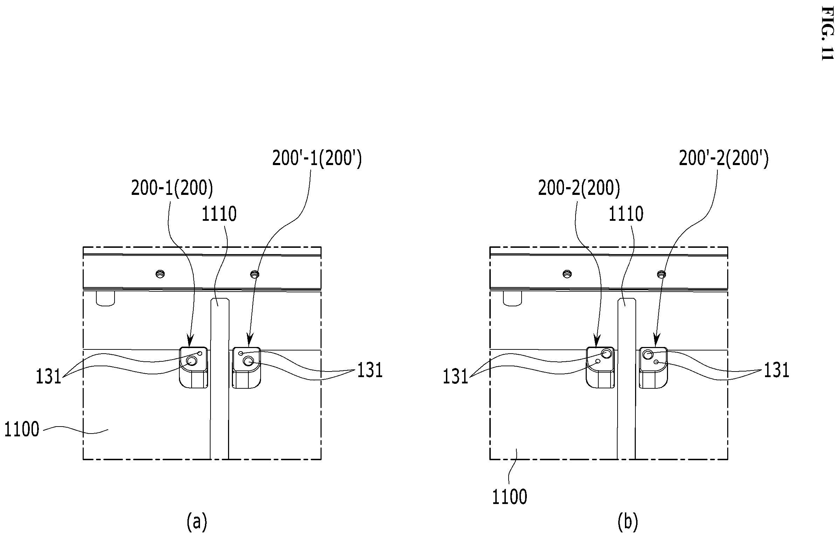

FIGS. 10 and 11 are each a diagram showing a state of use of the battery pack 1000 and coupling member 200 described above with reference to FIGS. 1 to 9.

Referring to FIG. 10, a plurality of coupling members 200 having different specifications(specs)/models/types are provided in the coupling member mounting part 1200 of the pack housing 1100 of the battery pack 1000. FIG. 10 shows, by way of example, a first coupling member 200-1 and a second coupling member 200-2.

FIG. 11(a) shows a state in which a first coupling member 200-1 is coupled to the pack housing 1100, and FIG. 11(b) shows a state in which a second coupling member 200-2 is coupled to the pack housing 1100. Referring to FIG. 11, the coupling member 200 may be provided as a set with a coupling member 200' whose fastening hole 131 are formed in left-right symmetry and/or up-down symmetry. For example, the first coupling member 200-1 may be provided as a set with the first coupling member 200'-1 whose fastening hole 131 are formed in left-right symmetry and/or up-down symmetry, and the second coupling member 200-2 may be provided as a set with the second coupling member 200'-2 whose fastening hole 131 are formed in left-right symmetry and/or up-down symmetry. For example, the size, position, number, shape, structure, and arrangement of the fastening hole 131 of the coupling member 200' may be formed in left-right symmetry and/or up-down symmetry with respect to the size, position, number, shape, structure, and arrangement of the fastening hole 131 of the coupling member 200.

Thereby, if the positions of the coupling member mounting parts 130 provided on the battery module 100, for example, the fastening hole 131 of the coupling member mounting parts 130 provided on the left side and the fastening hole 131 of the coupling member mounting parts 130 provided on the right side, are formed in left-right symmetry, the coupling member 200 and the coupling member 200' formed in left-right symmetry thereto can be coupled accordingly. This may also be applied similarly even when the coupling member mounting parts 130 of the battery module 100 are formed in up-down symmetry, and when the coupling members 200 are formed in up-down symmetry accordingly.

Although not specifically mentioned above, the battery pack according to an embodiment of the present disclosure may further comprise a battery management system (BMS) and/or a cooling device that manages the temperature and voltage of the battery.

Further, the battery pack of the present disclosure may be connected to a battery management system (BMS) (not shown). The battery management system monitors and manages the battery pack. The battery management system may be located on the uppermost layer of a vertically stacked battery pack. However, the position of the battery management system is not limited to those described above, and can be modified and changed in various ways in accordance with the method and environment in which the present disclosure is embodied.

Further, the battery pack according to an embodiment of the present disclosure can be applied to various devices, which include, for example, transportation vehicles such as electric bicycles, electric vehicles, and hybrids. However, the above-described devices are not limited thereto, and the battery pack according to the present embodiment can be used in various devices other than those illustrated above, which also falls within the scope of the present disclosure.

Further, the number of battery cells included in a battery module or the number of battery modules included in a battery pack can be determined in various ways depending on the output or capacity of the battery pack required for an electric vehicle or an energy storage system (ESS).

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

10: battery cell stack
100: battery module
110: module housing
120: end plate
130: coupling member mounting part
131: fastening hole
200: coupling member
210: battery module fixing part
211: fastening hole
220: pack fixing part
221: fastening hole
1100: pack housing
1200: coupling member mounting part
1211: fastening hole

## Claims

1. A battery pack comprising:
a battery module including a battery cell stack in which a plurality of battery cells are stacked;
a pack housing in which the battery module is mounted; and
a coupling member comprising: a pack fixing part that can be fixed between the pack housing and the coupling member, and a battery module fixing part that can be fixed between the battery module and the coupling member, so as to perform coupling between the battery module and the pack housing,
wherein the specifications of the battery module fixing part of each of the plurality of coupling members are provided so as to correspond to the specifications of the battery module that can be mounted in the pack housing among the plurality of coupling members that can be coupled to the pack housing, so that a coupling member suitable for the specifications of the battery module to be mounted in the pack housing is selected to couple to the battery module.

2. The battery pack of claim 1,
wherein the battery module comprises a coupling member mounting part that is coupled to the coupling member, and
the specifications of the battery module fixing parts of each of the plurality of coupling members are provided so as to correspond to the specifications of the coupling member mounting part of the battery module that can be mounted on the pack housing.

3. The battery pack of claim 2,
wherein the battery module comprises a module housing in which the battery cell stack is accommodated, and the coupling member mounting part is provided in the module housing.

4. The battery pack of claim 2,
wherein the battery module comprises an end plate that supports at least one surface of the battery cell stack, and the coupling member mounting part is provided on the end plate.

5. The battery pack of claim 2,
wherein the battery module fixing part of the coupling member and the coupling member mounting part of the battery module each comprise at least one fastening hole, and a fastener is inserted through the fastening hole of the battery module fixing part of the coupling member and the fastening hole of the coupling member mounting part of the battery module to thereby fix between the battery module and the coupling member, and
the specification comprises at least one of the size, position, number, shape, structure, and arrangement of the fastening hole.

6. The battery pack of claim 5,
wherein among the plurality of coupling members, the fastening hole of the battery module fixing part of the selected coupling member and the fastening hole of the coupling member mounting part of the battery module are aligned in a line, through which the fastener is passes to couple between the coupling member and the battery module.

7. The battery pack of claim 5,
wherein among the plurality of coupling members, the size, position, number, shape, structure, and arrangement of the fastening hole of the battery module fixing part of the selected coupling member coincide with the size, position, number, shape, structure, and arrangement of the fastening hole of the coupling member mounting part of the battery module.

8. The battery pack of claim 5,
wherein among the plurality of coupling members, at least some of the coupling members each differ in at least one of the size, location, number, shape, structure, and arrangement of the fastening holes.

9. The battery pack of claim 5,
wherein the battery module is provided with a plurality of coupling member mounting parts, and comprises the coupling member mounting part on each of both opposed surfaces of the battery module, or comprises the coupling member mounting part on each corner of the battery module, and
the coupling member mounting part of the battery module and the battery module fixing part of the coupling member are each provided by a plurality of sets.

10. The battery pack of claim 1,
wherein the pack housing comprises a coupling member mounting part to which the coupling member is mounted, and
the specifications of the pack fixing parts of each of the plurality of coupling members are provided so as to correspond to the specifications of the coupling member mounting part of the pack housing.

11. The battery pack of claim 10,
wherein the specifications of the pack fixing part of each of the plurality of the coupling members and the specifications of the coupling member mounting part of the pack housing are all the same, regardless of the specifications of the battery module.

12. The battery pack of claim 10,
wherein the pack fixing part of the coupling member and the coupling member mounting part of the pack housing each comprises at least one fastening hole, and a fastener is inserted through the fastening hole of the pack fixing part of the coupling member and the fastening hole of the coupling member mounting part of the pack housing, thereby being fixed between the coupling member and the pack housing, and
the specification comprises at least one of the size, position, number, shape, structure, and arrangement of the fastening hole.

13. The battery pack of claim 10,
wherein the fastening hole of the pack fixing parts of each of the plurality of the coupling members and the fastening hole of the coupling member mounting part of the pack housing are aligned in a line, through which the fastener is passed to thereby couple between the coupling members to the battery modules.

14. The battery pack of claim 10,
wherein the size, position, number, shape, structure, and arrangement of the fastening hole of the pack fixing parts of each of the plurality of the coupling members coincide with the size, position, number, shape, structure, and arrangement of the fastening hole of the coupling member mounting part of the pack housing.

15. The battery pack of claim 10,
wherein in the coupling member, the battery module fixing part is located on a surface different from the surface on which the pack fixing part is located.

16. The battery pack of claim 1,
wherein the battery pack further comprises a coupling member formed in left-right symmetry or up-down symmetry with the coupling member.

17. The battery pack of claim 1,
wherein the coupling member and the pack housing are formed integrally.
